# EUROPEAN PATENT SPECIFICATION

(11) **EP 0 560 288 B1**
(45) Date of publication and mention of the grant of the patent: **21.10.1998**
(21) Application number: 93103769.1
(22) Date of filing: 09.03.1993
(51) Int. Cl.: H04N 5/235, H04N 5/238

(54) **Light amount control apparatus and method**
Vorrichtung zur Regelung der Lichtmenge und Verfahren
Appareil pour contrôler la quantité de lumière et procédé

(30) Priority: 11.03.1992 JP 52776/92
(43) Date of publication of application: 15.09.1993
(73) Proprietor: SONY CORPORATION, Tokyo (JP)
(72) Inventor: Takahashi, Yoshikazu, Shinagawa-ku, Tokyo (JP); Isogawa, Toshiaki, Shinagawa-ku, Tokyo (JP); Satoh, Yutaka, Shinagawa-ku, Tokyo (JP); Shimizu, Shuji, Shinagawa-ku, Tokyo (JP)
(74) Representative: Müller, Frithjof E., Dipl.-Ing.

(56) References cited:
- EP-A- 0 393 401
- EP-A- 0 466 929
- US-A- 5 083 209

## Description

The present invention relates to a light amount control apparatus and method for use in a video camera or the like.

In a video camera having CCD (charge-coupled device) elements, a light from an object is radiated through an optical lens onto an image pickup screen. The light from the object is photoelectrically converted into an electrical signal and the electrical signal is read out from the CCD element as a video signal by a read control signal from a read circuit. The video signal is corrected in shading and in various levels and then processed in a suitable signal processing fashion. Then, the thus processed video signal is output.

In such video camera, a light amount from the object is automatically adjusted and supplied to the CCD elements by a so-called auto iris mechanism. When the cameraman takes a picture of very bright scene, there is then the possibility that the iris is closed to the extent that an optical diffraction phenomenon will occur. Therefore, when the cameraman takes a picture of a scene brighter than the brightness corresponding to the position that the iris causes the above optical diffraction phenomenon, an ND (neutral density) filter that reduces a brightness is mounted on the video camera or the video camera is operated in the shutter priority mode where the shutter operation has a priority. Therefore, a sensitivity is intentionally reduced by the cameraman by a so-called electronic shutter which can vary an electric charge accumulation time in the CCD element.

When the ND filter is attached to the video camera in use or the electronic shutter is utilized intentionally, the user must attach or detach the ND filter to and from the video camera and also the user must determine whether or not the electronic shutter should be utilized. This is very cumbersome for the user.

However, if the ND filter is not utilized or the electronic shutter is not utilized when the cameraman takes a picture of such bright scene, a resolution is deteriorated due to an optical diffraction phenomenon. There is then the disadvantage that the cameraman cannot take a picture satisfactorily.

This phenomenon becomes remarkable when the sensitivity of the CCD element is increased. In order to solve the above problem, there is no other way than attaching the ND filter to the video camera or intentionally using the electronic shutter that is expected in other purpose.

Prior art document EP-A-0 393 401 discloses an image pickup apparatus wherein an iris motor controls a lens dependent on an output of a comparator which is connected to an image pickup through an amplifier and a detector on the one hand and to a constant voltage source on the other hand. The lens value is detected by an iris value detector which is connected through an exposure time changing circuit to an image pickup driver for driving the image pickup. In this image pickup apparatus, when the iris value exceeds a predetermined amount, exposure control based on the electronic shutter is carried out while the iris value is fixed to the specific amount.

Further, prior art document US-A-5 083 209 discloses a video camera wherein the speed of shutter means is changed, with the opening size of a diaphragm remaining constant, when the brightness of an object light is above a predetermined value.

It is an object of the present invention to provide a light amount control apparatus and method in which the aforesaid shortcomings and disadvantages encountered with the prior art can be eliminated, in which an optical diffraction phenomenon can be prevented when a cameraman takes a picture of a bright scene, in which a cameraman can take a picture in response to an aperture value of an iris, and in which a cameraman can take a picture satisfactorily.

To solve this object the present invention provides a light amount control apparatus and method as specified in claims 1 and 2, respectively.

A light amount control apparatus for controlling an amount of a light from an optical system comprises an iris for adjusting an amount of a light from an optical system and supplies an adjusted light amount to an image pickup element, a driving circuit for driving the iris, a detecting circuit for detecting an aperture value of the iris, a shutter, and an iris control circuit for controlling the iris through the shutter and the driving circuit so that the aperture value of the iris can be prevented from exceeding a predetermined value when the aperture value of the iris detected by the detecting circuit exceeds the predetermined value.

In an imaging apparatus a light from an object is focused through an optical system to a target screen of an image pickup element and a light focused on the image pickup element is photoelectrically converted to obtain a video signal. This apparatus comprises an iris for adjusting an amount of a light from the optical system and supplying the adjusted light amount to the image pickup element, an iris control circuit for detecting an amplitude of the video signal from the image pickup element and driving the iris in response to the amplitude value of the video signal to control an aperture value of the iris, an aperture value detecting circuit for detecting the aperture value of the iris, a shutter for supplying a signal corresponding to an accumulation time of an electric charge accumulation control signal to the image pickup element, and a shutter control circuit for controlling the shutter so that the accumulation time of the electric charge accumulation control signal of the image pickup element is made constant by the shutter until the aperture value of the iris detected by the aperture value detecting circuit becomes a predetermined value and that the accumulation time of the electric charge accumulation control signal of the image pickup element is reduced by the shutter and the aperture value of the iris can be prevented from exceeding the predetermined value when the aperture value of the iris detected by the aperture value detecting circuit becomes a predetermined value.

A light amount control method for controlling an amount of a light from an optical system comprises the steps of an aperture value detecting step for detecting an aperture value of an iris, an aperture value comparing step for comparing the aperture value of the iris detected in the aperture value detecting step with a predetermined value of an aperture value, and an iris control step for controlling the iris through shutter means and driving means so that the aperture value of the iris can be prevented from exceeding a predetermined value when the aperture value of the iris detected at the aperture value detecting step becomes the predetermined value.

The above and other objects, features, and advantages of the present invention will become apparent from the following detailed description of an illustrative embodiment thereof to be read in conjunction with the accompanying drawings, in which like reference numerals are used to identify the same or similar parts in the several views.
FIG. 1 is a block diagram showing a light amount control apparatus according to an embodiment of the present invention;
FIG. 2 is a perspective view showing a main portion of the light amount control apparatus according to the embodiment of the present invention;
FIG. 3 is a perspective view showing other example of a main portion of the light amount control apparatus according to the embodiment of the present invention;
FIG. 4 is a flowchart to which references will be made in explaining operation of the light amount control apparatus according to the embodiment of the present invention;
FIG. 5 is a graph used to explain the light amount control apparatus according to the embodiment of the present invention; and
FIG. 6 is a graph used to explain the light amount control apparatus according to the embodiment of the present invention.

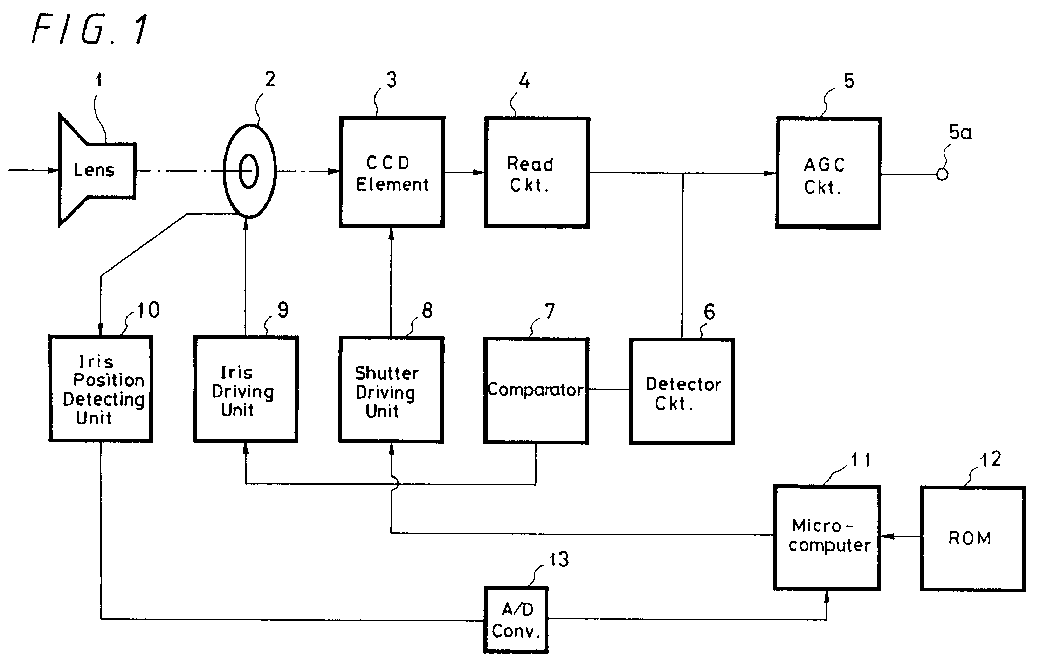

A light amount control apparatus according to an embodiment of the present invention will hereinafter be described with reference to FIG. 1.

As shown in FIG. 1 of the accompanying drawings, a light of an object is supplied from a lens 1 through an iris 2 to a CCD device 3. An amount of light from the lens 1 is adjusted by the iris 2 in response to a drive signal from an iris driving unit 9.

An aperture amount (hereinafter referred to as an aperture value) of the iris 2 that is driven by the drive signal from the iris driving unit 9 is detected by an iris position detecting unit 10. A detected signal from the iris position detecting unit 10 is converted into a digital signal by an A/D (analog-t-digital) converter 13 and the digital signal is supplied to a microcomputer 11.

The microcomputer 11 compares aperture value data (aperture value provided a little before the diffraction phenomenon occurs) from a ROM (read only memory) 12 such as an EEPROM (electrically erasable and programmable ROM) or the like and aperture value data supplied thereto from the iris position detecting unit 10 through the A/D converter 13. On the basis of the compared result, the microcomputer 11 controls a shutter driving unit 8. The shutter driving unit 8 changes a signal corresponding to an accumulation time of an electric charge accumulation control signal supplied to the CCD device 3 on the basis of the control signal from the microcomputer 1. In this case, if the ROM 12 is formed of a writable memory such as the EEPROM, then it becomes possible to freely set aperture values at which the diffraction phenomenon occurs in video cameras using different kinds of and different types of CCD image pickup devices, lenses and irises.

An electric charge accumulated in the CCD device is read out by a read circuit 4 to provide a video signal. This video signal is supplied to an AGC (automatic gain control) circuit 5 and a detecting circuit 6. In the AGC circuit 5, a gain is given to the video signal read by the read circuit 4. Then, this video signal is supplied through an output terminal 5a to a video camera body circuit (not shown).

The detecting circuit 6 detects the video signal read by the read circuit 4 to detect the level thereof and supplies the detected signal to a comparator 7. The comparator 7 compares the level represented by the detected signal from the detecting circuit 6 and an inside reference level. The comparator 7 supplies a control signal to the iris driving unit 9 on the basis of the compared result so that the aperture value of the iris 2 is controlled through the iris driving circuit 9.

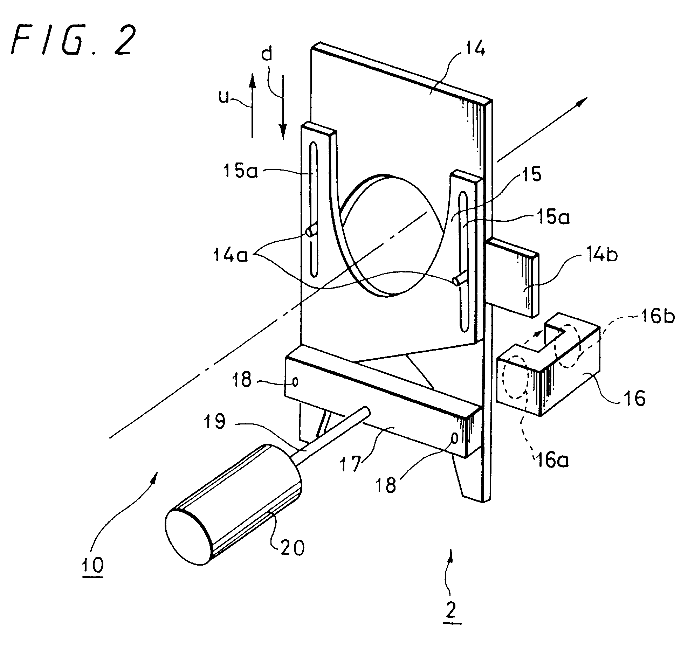

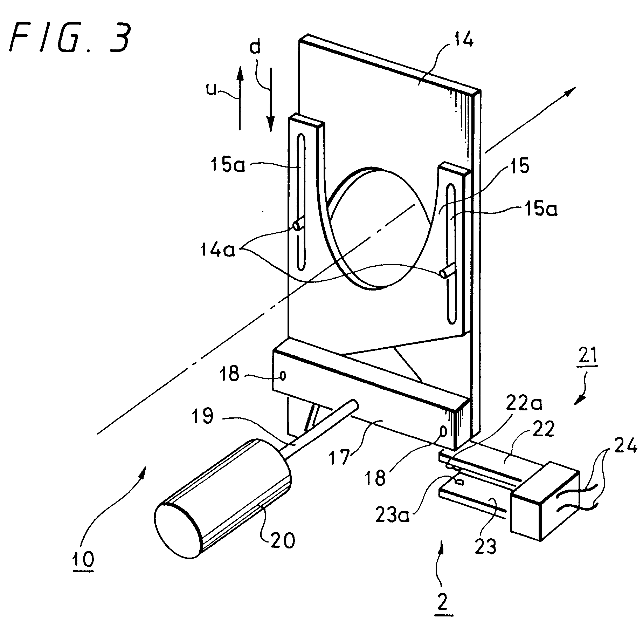

Examples of structures of the iris 2 and the iris position detecting unit 10 will be described with reference to FIGS. 2 and 3.

In FIG. 2, reference numeral 14 designates an upper blade. The upper blade 14 has an ellipsoidal recess formed on the lower portion and shafts 14a formed or attached thereto at its both side portions. Further, the upper blade 14 has a shielding plate 14b formed at a predetermined position of the right-hand side of the sheet of drawing.

In FIG. 2, reference numeral 15 depicts a lower blade. The lower blade 15 has an ellipsoidal recess formed on its upper portion. Slits 15a are formed on both side portions of the lower blade 15.

The shafts 14a formed on or attached to both sides of the upper blade 14 are movably attached to the slits 15a formed on both sides of the lower blade 15. A left end portion of an arm 17 is rotatably attached to the lower blade 15 at its lower right portion on the sheet of drawing by means of shafts 18. Further, the central portion of the arm 17 and a meter 20 are fixed by a shaft rod 19.

As shown in FIG. 2, at a lower predetermined position perpendicular to an extension line vertically extended from the shielding plate 14b, there is disposed a detector 16 (e.g., photo coupler, Hall element or the like) which comprises a light emitting portion 16a and a light sensing portion 16b which receives a light emitted from the light emitting portion 16a. The position at which the detector 16 is disposed is selected to be a position a little ahead of the position at which the diffraction phenomenon, for example, starts to occur. This detector 16 may be either a mechanical switch or optical switch.

When the iris 2 is opened by the iris driving unit 9 shown in FIG. 1, as shown in FIG. 2, the upper blade 14 is moved in the direction shown by an arrow u and the lower blade 15 is moved in the direction shown by an arrow d. At that time, the arm 17 attached to the upper and lower blades 14 and 15 are rotated in a counter-clock wise direction on the sheet of drawing. A rotation amount of the arm 17 is detected by the meter 20, and the detection signal is supplied through the A/D converter 13 to the microcomputer 11 shown in FIG. 1. The microcomputer 11 controls the shutter driving unit 8 on the basis of the detection signal supplied thereto from the meter 20 of the iris position detecting unit 10 through the A/D converter 13.

On the other hand, when the iris 2 is closed by the iris driving unit 9 shown in FIG. 1, as shown in FIG. 2, the upper blade 14 is moved in the direction shown by the arrow d and the lower blade 15 is moved in the direction shown by the arrow u. At that time, the arm 17 attached to the upper and lower blades 14 and 15 are rotated in a counter-clockwise direction on the sheet of drawing. Then, the rotation amount of the arm 17 is detected by the meter 20 and the detection signal is supplied through the A/D converter 13 to the microcomputer 11. The microcomputer 11 controls the shutter driving unit 8 on the basis of the detection signal supplied thereto from the meter 20 of the iris position detecting unit 10 through the A/D converter 13. Thus, a so-called electronic shutter operation speed can be varied.

When the shielding plate 14b of the upper blade 14 is entered into the concave portion of the detector 16, a light emitted from the light emitting portion 16a of the detector 16 is interrupted and is not supplied to the light sensing portion 16b. Thus, the microcomputer 11 detects that the iris 2 is located at the position a little ahead of the position at which the diffraction phenomenon will occur. Then, the microcomputer 11 controls the shutter driving unit 8 so that a so-called electronic shutter operation speed can be varied.

FIG. 3 shows other example of the structures of the iris 2 and the iris position detecting unit 10 shown in FIG. 2. This example will be described below.

In FIG. 3, reference numeral 14 designates an upper blade. The upper blade 14 has an ellipsoidal recess formed on the lower portion and shafts 14a formed or attached thereto at its both side portions. Further, the upper blade 14 has a shielding plate 14b formed at a predetermined position of the right-hand side of the sheet of drawing.

In FIG. 2, reference numeral 15 depicts a lower blade. The lower blade 15 has an ellipsoidal recess formed on its upper portion. Slits 15a are formed on both side portions of the lower blade 15.

The shafts 14a formed on or attached to both sides of the upper blade 14 are movably attached to the slits 15a formed on both sides of the lower blade 15. A left end portion of an arm 17 is rotatably attached to the lower blade 15 at its lower right portion on the sheet of drawing by means of shafts 18. Further, the central portion of the arm 17 and a meter 20 are fixed by a shaft rod 19.

As shown in FIG. 3, on the right-hand side of the sheet of the drawing of the arm 17, i.e., on the lower portion of the connected portion between the arm 17 and the lower blade 15, there is disposed a switch 21 which comes in contact with the arm 17 when the arm 17 is rotated in the clockwise direction on the sheet of drawing. The switch 21 (e.g., leaf switch or the like) generates an ON signal through a lead wire 24 when a contact 22a of a member 22 and a contact 23a of a member 23 are brought in contact with each other. Further, the position at which the switch 21 is turned on is selected to be the position a little ahead of the position at which the diffraction phenomenon starts to occur.

When the iris 2 is opened by the iris driving unit 9 shown in FIG. 1, as shown in FIG. 3, the upper blade 14 is moved in the direction shown by an arrow u and the lower blade 15 is moved in the opening direction shown by an arrow d. At that time, the arm 17 attached to the upper and lower blades 14 and 15 are rotated in a counter-clock wise direction on the sheet of drawing. A rotation amount of the arm 17 is detected by the meter 20, and the detection signal is supplied through the A/D converter 13 to the microcomputer 11 shown in FIG. 1. The microcomputer 11 controls the shutter driving unit 8 on the basis of the detection signal supplied thereto from the meter 20 of the iris position detecting unit 10 through the A/D converter 13.

On the other hand, when the iris 2 is closed by the iris driving unit 9 shown in FIG. 1, as shown in FIG. 3, the upper blade 14 is moved in the direction shown by the arrow d and the lower blade 15 is moved in the direction shown by the arrow u. At that time, the arm 17 attached to the upper and lower blades 14 and 15 are rotated in a counter-clockwise direction on the sheet of drawing. Then, the rotation amount of the arm 17 is detected by the meter 20 and the detection signal is supplied through the A/D converter 13 to the microcomputer 11. The microcomputer 11 controls the shutter driving unit 8 on the basis of the detection signal supplied thereto from the meter 20 of the iris position detecting unit 10 through the A/D converter 13. Thus, a so-called electronic shutter operation speed can be varied.

When the upper blade 14 is moved downwardly on the sheet of drawing as shown by the arrow d and the right end portion of the arm 17 pushes the member 22 of the switch 21 so that the contact 22a of the switch 21 and the contact 23a of the member 23 are brought in contact with each other, the switch 21 is turned on and thus, the microcomputer 11 shown in FIG. 1 detects that the iris 2 is located at the position a little ahead of the position at which the diffraction phenomenon will occur. Then, the microcomputer 11 controls the shutter driving unit 8 so that a so-called electronic shutter operation speed can be varied.

The reason that the microcomputer 11 controls the shutter driving unit 8 to thereby vary the so-called electronic shutter operation speed when the iris 2 is located at the position a little ahead of the position at which the diffraction phenomenon starts to occur in FIGS. 2 and 3 will be described. As earlier noted with reference to FIG. 1, the iris 2 is opened and closed in response to the level of the video signal so that, when the cameraman takes a picture of very bright scene, the iris 2 is closed considerably, i.e., utilized in the small aperture state. Then, the diffraction phenomenon occurs so that the resolution of the displayed picture is deteriorated. Therefore, when the aperture value of the iris 2 is brought to the position a little ahead of the position at which the diffraction phenomenon occurs, this is detected. Then, the electric charge accumulation time in the CCD element 3 is reduced by controlling the shutter driving unit 8, for example, and a sensitivity of the CCD element 3 relative to the video signal is lowered, thereby lowering the level of the video signal. Therefore, the iris 2 is automatically driven in the opening direction to thereby prevent the diffraction phenomenon from taking place.

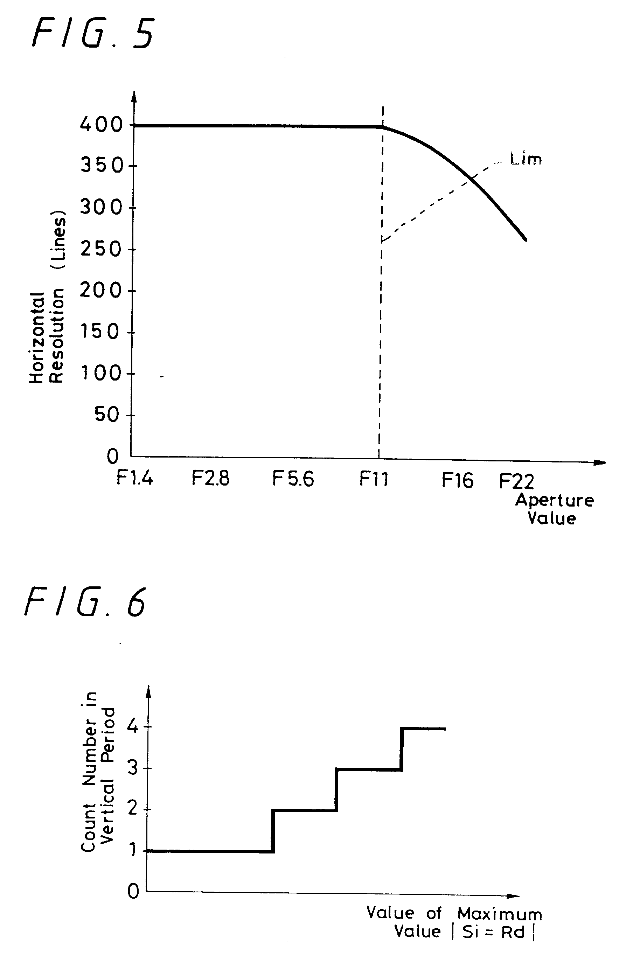

In this embodiment, an aperture value of the iris 2 in which the diffraction phenomenon occurs is set to F11 as shown in FIG. 5, for example. The aperture value, i.e., F11 of the iris 2 represents a limit lim at which a horizontal resolution starts being deteriorated as shown in FIG. 5.

The horizontal resolution is deteriorated by the small aperture of the iris 2 shown in FIG. 5 at different timings due to the different sizes (e.g., 1.2-inch, 1/3-inch, etc.) of CCD elements. That is, the smaller the size of the CCD element becomes, the smaller the mechanical size of the optical system becomes. Consequently, the iris 2 tends to be closed largely.

According to this embodiment, the positional information f the iris 2 provided before the occurrence of diffraction phenomenon is stored in advance in the ROM 21. When the iris 2 is closed to the small aperture position, the microcomputer 11 determines such condition and automatically allows the speed of the electronic shutter operation for the CCD element 3 to be increased progressively. As a result, the sensitivity of the CCD element 3 is relatively lowered, thereby opening the iris 2. When the iris 2 is opened more than the above small aperture position, the electronic shutter operation is progressively returned to the stationary state to thereby prevent the sensitivity of the CCD element 3 from being deteriorated. As will be described later, the count-up/count-down step for the electronic shutter operation is carried out at the minimum unit, whereby the influence exerted upon the output of the CCD element 3, i.e., the picture quality of the video signal can be minimized.

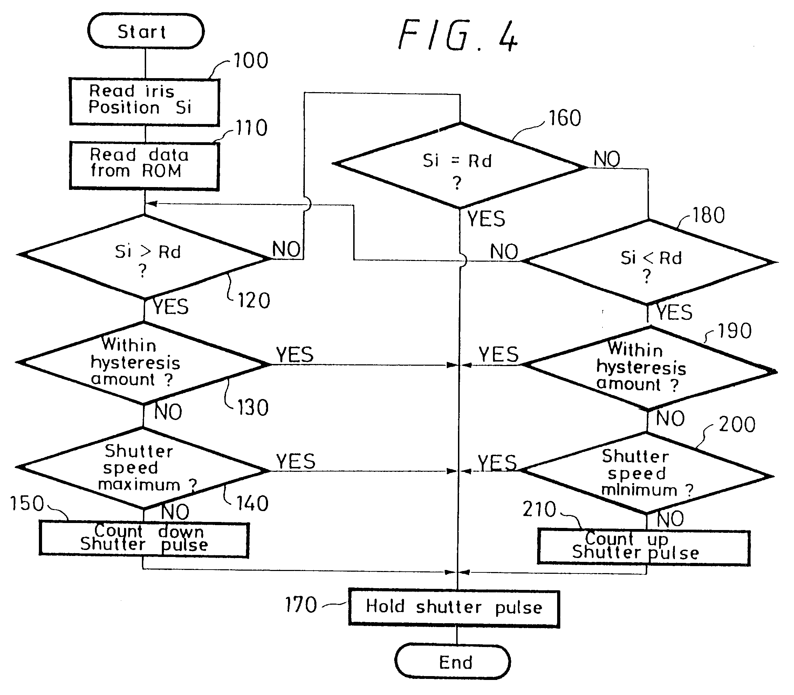

Operation of the light amount control apparatus shown in FIG. 1 will be described with reference to a flowchart forming FIG. 4. A series of operation, which will be described below, is repeated at one vertical frequency, for example.

Referring to FIG. 4, an iris position is read at step 100 and then the processing proceeds to step 110. That is, a position signal (obtained from the rotation amount) Si of the iris 2 supplied from the iris position detecting unit 10 through the A/D converter 13 shown in FIG. 1 is read out.

At step 110, data is read out from the ROM 12 and then the processing proceeds to decision step 120. That is, position data corresponding to the aperture value of the iris 2 a little before the diffraction phenomenon occurs is read out from the ROM 12 shown in FIG. 1.

It is determined in decision step 120 whether or not the position data Si of the iris 2 is larger than the reference position data Rd read out from the ROM 12. If a YES is output at decision step 120. then the processing proceeds to step 130. If a NO is output, then the processing proceeds to step 160.

It is determined in decision step 160 whether or not the judged result in step 120 falls within a hysteresis amount. If a YES is output at decision step 130, then the processing proceeds to step 170. If a NO is output, the processing proceeds to step 140. That is, it is determined in decision step 130 whether or not the absolute value of a difference between the position data Si obtained by the calculation in step 120 and the reference position data Rd is larger than a hysteresis amount.

It is determined in decision step 140 whether or not the shutter speed is maximum. If a YES is output at decision step 140, then the processing proceeds to step 200. If a NO is output, then the processing proceeds to step 150.

In step 150, a shutter pulse is counted down and then the processing proceeds to step 170. That is, a shutter speed represented by the control signal that controls the shutter driving unit 8 shown in FIG. 1 is increased.

If a NO is output at decision step 120, then the processing proceeds to decision step 160. It is determined in decision step 160 whether or not the position signal S2 and the reference position signal are equal to each other. If a YES is output, then the processing proceeds to step 170. If a NO is output, then the processing proceeds to step 180.

In step 170, the shutter pulse is held and the processing is ended. That is, the shutter speed represented by the control signal that controls the shutter driving unit 8 shown in FIG. 1 is held.

It is determined in decision step 180 whether or not the position signal Si is smaller than the reference position signal Rd. If a YES is output, then the processing proceeds to step 190. If a NO is output, the processing proceeds to step 120 one more time.

It is determined in decision step 190 whether the result at step 180 falls within the hysteresis amount. If a YES is output, then the processing proceeds to step 170. If a NO is output, the processing proceeds to step 200. That is, it is determined whether or not the absolute value of the difference between the position data Si obtained by the calculation in step 180 and the reference position data Rd is larger than the hysteresis amount.

It is determined in decision step 200 whether or not the shutter speed is minimum. If a YES is output, then the processing proceeds to step 170. If a NO is output, then the processing proceeds to step 210.

In step 210, the shutter pulse is counted up and then the processing proceeds to step 170. That is, the shutter speed represented by the control signal that controls the shutter driving unit 8 shown in FIG. 1 is increased.

As will be clear from the flowchart of FIG. 4, when the position signal Si supplied from the iris position detecting unit 10 through the A/D converter 13 is larger than the reference position signal (located a little ahead of the position at which the diffraction phenomenon occurs) read out from the ROM 12, it is further determined whether the difference therebetween falls within the hysteresis value. If the difference falls within the hysteresis value, the electric charge accumulation time in the CCD element 3 by the shutter driving unit 8 is held in the present state. If it does not fall within the hysteresis value and further the shutter speed (e.g., electric charge accumulation time in the CCD element 3) is not maximum, then the shutter speed is increased. Therefore, the oscillation of the auto-iris system and the up/down of the electronic shutter operation speed can be prevented.

If the position signal Si supplied from the iris position detecting unit 10 through the A/D converter 13 is equal to the reference position signal Rd read out from the ROM 12, then the electric charge accumulation time in the CCD element 3 by the shutter driving unit 8 is held in the present state.

If the position signal Si supplied from the iris position detecting unit 10 through the A/D converter 13 is smaller than the reference position signal Rd read out from the ROM 12, then it is determined whether or not the difference therebetween falls within the hysteresis value. If the difference falls within the hysteresis value, then the electric charge accumulation time in the CCD element 3 by the shutter driving unit 8 is held in the present state. If the difference does not fall within the hysteresis value and the shutter speed (e.g., electric charge accumulation time in the CCD element 3 is not minimum, then the shutter speed is lowered, thereby preventing the oscillation caused by the auto-iris system and the up/down of the electronic shutter operation speed.

If the position signal Si is larger than the reference position signal Rd, the difference therebetween is out of the hysteresis value and the shutter speed is maximum and if the position signal Si is smaller than the reference position signal Rd, the difference therebetween is out of the hysteresis value and the shutter speed is minimum, then the shutter speed is held.

A maximum speed of the electronic shutter operation is set to 1/1-169 second according to the NTSC system and 1/10040 second according to the PAL system.

However, if the shutter speed is high, the output component that is changed by counting up or counting down the shutter pulse vt "1" is increased, which frequently affects the picture quality of the video signal output from the CCD element 3. Therefore, it is preferable that the shutter speed is about 1/250 second. Accordingly, if the count value of the maximum speed is stored in the ROM 12, a freedom can be increased.

The minimum speed of the electronic shutter speed is 1/60 second according to the NTSC system and 1/50 second according to the PAL system. However, in a video camera having a so-called slow shutter function, the minimum speed of the electronic shutter speed may become a set value.

While a series of operation is carried out at one vertical cycle, i.e., the shutter speed is changed by ± 1 count during one vertical cycle as described above, as shown in FIG. 6, in response to the absolute value of the difference between the position signal Si supplied thereto from the iris position detecting unit 10 through the A/D converter 13 and the reference position signal Rd read out from the ROM 12, the count up or count down amount can be varied as "1", "2", "3", "4" during one vertical cycle.

In this case, when the light amount is suddenly changed, the problem of such change of light amount can be solved by changing the count-up or count-down amount can be changed nonlinearly.

Such rapid change can be detected with ease by using the absolute value of the difference between the position signal Si and the reference position signal Rd or absolute value of difference between the value of the position signal Si of one vertical cycle before and the value of the position signal Si of one vertical cycle before and the reference position signal Rd. As described above, according to this embodiment, if the position of the iris 2, i.e., the aperture value is larger than the aperture value provided a little before the diffraction phenomenon occurs, the difference therebetween does not fall within the hysteresis value and the shutter speed is not maximum, the shutter pulse that is the control signal supplied to the shutter driving unit 8 is counted down to thereby increase the shutter speed.

If the position of the iris 2, i.e., the aperture value is larger than the aperture value provided a little before the diffraction phenomenon occurs, the difference therebetween does not fall within the hysteresis value and the shutter speed is maximum, the shutter pulse that is the control signal supplied to the shutter driving unit 8 is held to thereby hold the shutter speed.

If the position of the iris 2, i.e., the aperture value is larger than the aperture value provided a little before the diffraction phenomenon occurs and the difference therebetween falls within the hysteresis value, the shutter pulse that is the control signal supplied to the shutter driving unit 8 is held to thereby hold the shutter speed.

If the position of the iris 2, i.e., the aperture value is smaller than the aperture value provided a little before the diffraction phenomenon occurs, the difference therebetween does not fall within the hysteresis value and the shutter speed is not minimum, the shutter pulse that is the control signal supplied to the shutter driving unit 8 is counted up to thereby decrease the shutter speed.

If the position of the iris 2, i.e., the aperture value is smaller than the aperture value provided a little before the diffraction phenomenon occurs, the difference therebetween does not fall within the hysteresis value and the shutter speed is minimum, the shutter pulse that is the control signal supplied to the shutter driving unit 8 is held to thereby hold the shutter speed.

If the position of the iris 2, i.e., the aperture value is smaller than the aperture value provided a little before the diffraction phenomenon occurs and the difference therebetween falls within the hysteresis value, the shutter pulse that is the control signal supplied to the shutter driving unit 8 is held to thereby hold the shutter speed.

If the position of the iris 2, i.e., the aperture value is the same as the aperture value provided a little before the diffraction phenomenon occurs, the shutter pulse that is the control signal supplied to the shutter driving unit 8 is held to thereby hold the shutter speed. Accordingly, the interference exerted on the output video signal by the auto-iris system and the speed-up/speed-down of electronic shutter can be prevented. Further, when the cameraman takes a picture of bright scene, an optical diffraction phenomenon can be prevented and the shooting can be carried out in response to the aperture value of the iris. Therefore, the cameraman can always take a picture under satisfactory condition. Further, even when the light amount is increased after the iris 2 is located at the position a little ahead of the position at which the diffraction phenomenon occurs, as described above, the speed of the electronic shutter operation can be changed such that an oscillation can be prevented from being produced in the output of the CCD element 3. Also, in this case, the deterioration of the picture quality of the video signal can be suppressed to the minimum and a so-called overflow phenomenon can be prevented. Thus, the cameraman can take a picture satisfactorily.

Though not shown, according to a modified example of the present invention, the light amount control apparatus may include an ND filter and a driving unit for driving this ND filter. When the microcomputer 11 detects that the iris 2 is located at the position a little ahead of the position at which the diffraction phenomenon will occur, the microcomputer 11 control the ND filter driving unit and the ND filter is moved and located at the front surface portion of the CCD element 3 of the video camera. Thus, the sensitivity of the CCD element 3 is lowered and the iris 2 is opened.

In this case, as earlier noted with reference to the flowchart of FIG. 4, a hysteresis value is set to be more than the change of iris position corresponding to the density of the ND filter. If the hysteresis value is set as described above, the oscillation of the output from the CCD element 3 can be prevented. Because, when the ND filter is attached to or detached from the video camera by the position of the iris 2, if there is not provided the hysteresis more than the changed amount of the iris position corresponding to the density of the ND filter, then the output of the CCD element 3 is oscillated.

While the image pickup element is merely described as the CCD element 3 as described above, the present invention is not limited thereto and can also be applied to any of a 1-chip image pickup element, a 2-chip image pickup element and a 3-chip image pickup element.

Alternatively, the speed of the electronic shutter operation may be changed in response to the light amount. Also, the position of the iris 2 in which the electronic shutter operation is started may be freely set by providing an EEPROM and writing means, for example, in response to lenses used.

According to the present invention, the aperture value of the iris can be prevented from exceeding a predetermined value after the aperture value of the iris detected by the detecting means became the predetermined value. When the cameraman takes a picture of a bright scene, for example, the optical diffraction phenomenon can be prevented and the satisfactory shooting can be carried out.

Further, according to the present invention, the shutter speed of the shutter means is made constant until the aperture value of the iris detected by the detecting means becomes a predetermined value. When the aperture value of the iris detected by the detecting means exceeds the predetermined value, the shutter speed of the shutter means is changed. Accordingly, the cameraman can take a picture in accordance with the aperture value of the iris. Thus, the optical diffraction phenomenon can be prevented and the cameraman can always take a picture under the satisfactory condition.

Having described a preferred embodiment of the invention with reference to the accompanying drawings, it is to be understood that the invention is not limited that precise embodiment and that various changes and modifications could be effected by one skilled in the art without departing from the scope of the invention as defined in the appended claims.

## Claims

1. A light amount control apparatus for controlling an amount of a light from an optical system comprising:
(a) an iris (2) for adjusting an amount of a light from an optical system and supplying an adjusted light amount to an image pickup element (3, 4);
(b) driving means (9) for driving said iris (2);
(c) detecting means (10) for detecting an aperture value of said iris (2);
(d) shutter means (3, 8); and
(e) shutter control means (11);
characterized in that
(f) said shutter control means (11) is provided for changing a shutter speed of said shutter means (3, 8) to control said shutter means (3, 8) so that a shutter speed of said shutter means (3, 8) is decreased when the shutter speed is not minimum in each point of the range where the aperture value of said iris (2) is smaller than a predetermined value and that the shutter speed is increased when the shutter speed is not maximum in each point of the range where the aperture value of said iris (2) detected by said detecting means (10) is larger than said predetermined value,
wherein said predetermined value is situated in a third range which is between said ranges and in which no correction of the shutter speed is carried out.

2. A light amount control method for controlling an amount of a light from an optical system comprising the steps of:
(a) detecting an aperture value of an iris (2);
(b) comparing the aperture value of said iris (2) detected in said aperture value detecting step with a predetermined value of an aperture value; and
(c) controlling a shutter speed so that the shutter speed of shutter means (3, 8) is decreased when the shutter speed is not minimum in each point of the range where the aperture value of said iris (2) detected in said aperture value detecting step is smaller than said predetermined value and that the shutter speed is increased when the shutter speed is not maximum in each point of the range where the aperture value of said iris (2) detected in said aperture value detecting step is larger than said predetermined value,
wherein said predetermined value is situated in a third range which is between said ranges and in which no correction of the shutter speed is carried out.

## Patentansprüche

1. Lichtmengenregelvorrichtung zum Regeln einer Lichtmenge von einem optischen System, umfassend:
(a) eine Iris (2) zum Einstellen einer Lichtmenge von einem optischen System und zum Einspeisen einer gestellten Lichtmenge zu einem Bildaufnahmeelement (3, 4),
(b) eine Ansteuereinrichtung (9) zum Ansteuern der Iris (2),
(c) eine Detektoreinrichtung (10) zum Erfassen eines Aperturwertes der Iris (2),
(d) eine Verschlußeinrichtung (3, 8), und
(e) eine Verschlußsteuereinrichtung (11),
**dadurch gekennzeichnet, daß**
(f) die Verschlußsteuereinrichtung (11) vorgesehen ist, um eine Verschlußgeschwindigkeit der Verschlußeinrichtung (3, 8) zu verändern, um die Verschlußeinrichtung (3, 8) so zu steuern, daß eine Verschlußgeschwindigkeit der Verschlußeinrichtung (3, 8) vermindert wird, wenn die Verschlußgeschwindigkeit nicht minimal ist in jedem Punkt des Bereiches, in dem der Aperturwert der Iris (2) kleiner als ein vorbestimmter Wert ist, und daß die Verschlußgeschwindigkeit angehoben wird, wenn die Verschlußgeschwindigkeit nicht maximal ist in jedem Punkt des Bereiches, in dem der Aperturwert der Iris (2), der durch die Detektoreinrichtung (10) erfaßt ist, größer ist als der vorbestimmte Wert,
wobei der vorbestimmte Wert in einem dritten Bereich gelegen ist, der zwischen den Bereichen liegt und in welchem keine Korrektor der Verschlußgeschwindigkeit ausgeführt wird.

2. Lichtmengenregelverfahren zum Regeln einer Lichtmenge von einem optischen System, umfassend die folgenden Schritte:
(a) Erfassen eines Aperturwertes einer Iris (2),
(b) Vergleichen des Aperturwertes der Iris (2), der durch den Aperturwerterfassungsschritt erfaßt ist, mit einem vorbestimmten Wert des Aperturwertes, und
(c) Steuern einer Verschlußgeschwindigkeit derart, daß die Verschlußgeschwindigkeit der Verschlußeinrichtung (3, 8) vermindert wird, wenn die Verschlußgeschwindigkeit nicht minimal ist in jedem Punkt des Bereiches, in dem der Aperturwert der Iris (2), der durch den Aperturwerterfassungsschritt erfaßt ist, kleiner ist als der vorbestimmte Wert, und daß die Verschlußgeschwindigkeit erhöht wird, wenn die Verschlußgeschwindigkeit nicht maximal ist in jedem Punkt des Bereiches, in dem der Aperturwert der Iris (2), der in dem Aperturwerterfassungsschritt erfaßt ist, größer ist als der vorbestimmte Wert,
wobei der vorbestimmte Wert in einem dritten Bereich gelegen ist, der zwischen den Bereichen liegt und in dem keine Korrektur der Verschlußgeschwindigkeit ausgeführt wird.

## Revendications

1. Dispositif de commande de quantité de lumière destiné à commander la quantité de lumière provenant d'un système optique comprenant :
(a) un iris (2) destiné à régler la quantité de lumière issue d'un système optique et à délivrer une quantité de lumière réglée à un élément de saisie d'image (3, 4) ;
(b) un moyen d'attaque (9) destiné à attaquer le dit iris (2) ;
(c) un moyen de détection (10) destiné à détecter une valeur d'ouverture dudit iris (2) ;
(d) un moyen obturateur (3, 8) ; et
(e) un moyen de commande d'obturateur (11);
caractérisé en ce que :
(f) ledit moyen (11) de commande d'obturateur est prévu pour faire varier une vitesse d'obturateur dudit moyen obturateur (3, 8) pour commander ledit moyen obturateur (3, 8) de façon à diminuer la vitesse d'obturateur dudit moyen obturateur (3, 8) lorsque la vitesse d'obturateur n'est pas minimale en chaque point de la plage dans laquelle la valeur d'ouverture dudit iris (2) est plus petite qu'une valeur prédéterminée, et de façon à augmenter la vitesse d'obturateur lorsque la vitesse d'obturateur n'est pas maximale en chaque point de la plage dans laquelle la valeur d'ouverture dudit iris (2) détectée par ledit moyen (10) de détection est plus grande que ladite valeur prédéterminée,
ladite valeur prédéterminée étant située dans une troisième plage qui est entre lesdites plages et dans laquelle aucune correction de la vitesse d'obturateur n'est effectuée.

2. Procédé de commande de quantité de lumière destiné à commander une quantité de lumière issue d'un système optique, comprenant les étapes :
(a) de détection d'une valeur d'ouverture d'un iris (2) ;
(b) de comparaison de la valeur d'ouverture dudit iris (2) détectée dans ladite étape de détection de valeur d'ouverture avec une valeur prédéterminée d'une valeur d'ouverture ; et
(c) de commande de la vitesse d'obturateur de façon que la vitesse d'obturateur d'un moyen obturateur (3, 8) diminue lorsque la vitesse d'obturateur n'est pas minimale en chaque point de la plage dans laquelle la valeur d'ouverture dudit iris (2), détectée dans ladite étape de détection de valeur d'ouverture, est plus petite que ladite valeur prédéterminée et de façon que la vitesse d'obturateur augmente lorsque la vitesse d'obturateur n'est pas maximale en chaque point de la plage dans laquelle la valeur d'ouverture dudit iris (2), détectée dans ladite étape de détection de valeur d'ouverture, est plus grande que ladite prédéterminée,
ladite valeur prédéterminée étant située dans une troisième plage qui est entre lesdites plages et dans laquelle aucune correction de la vitesse d'obturateur n'est effectuée.
